**Europäisches Patentamt**

**European Patent Office**

**Office européen des brevets**

(11) Veröffentlichungsnummer: **0 205 129 B1**

## EUROPÄISCHE PATENTSCHRIFT

(45) Veröffentlichungstag der Patentschrift: **17.04.91**

(51) Int. Cl.⁵: **G05D 16/06**

(21) Anmeldenummer: **86107773.3**

(22) Anmeldetag: **06.06.86**

(54) **Pneumatischer Druckschalter zum Steuern der Druckluftkammer von mediumdurchströmten Armaturen.**

(30) Priorität: **07.06.85 DE 3520554**

(43) Veröffentlichungstag der Anmeldung:
**17.12.86 Patentblatt 86/51**

(45) Bekanntmachung des Hinweises auf die
Patenterteilung:
**17.04.91 Patentblatt 91/16**

(84) Benannte Vertragsstaaten:
**AT BE CH FR GB IT LI NL SE**

(56) Entgegenhaltungen:
**DE-B- 1 199 090**
**DE-C- 539 974**
**US-A- 2 268 783**

(73) Patentinhaber: **BOPP & REUTHER GMBH**
**Carl-Reuther-Strasse 1**
**W-6800 Mannheim 31(DE)**

(72) Erfinder: **Schmitt, Manfred**
**Johann-Casimir-Strasse 17**
**W-6701 Friedelsheim(DE)**
Erfinder: **Zitzelsberger, Emil**
**Ulmenweg 6**
**W-6148 Heppenheim/Kirschhausen(DE)**

(74) Vertreter: **Fritsch, Klaus, Dipl.-Ing.**
**Richard Wagner Strasse 1a**
**W-6701 Hochdorf-Assenheim 2(DE)**

**Beschreibung**

Die Erfindung bezieht sich auf einen pneumatischen Druckluftschalter zum Steuern der Druckluftkammer von mediumdurchströmten Armaturen, insbesondedere von zusatzbelasteten Sicherheitsventilen, wobei die Druckluftkammer über eine Luftzuführleitung an die Druckluftquelle und über eine Luftabführleitung an ein Auslaßventil angeschlossen ist, das einen größeren Öffnungsquerschnitt als die gegebenenfalls gedrosselte Luftzuführleitung aufweist und von dem pneumatischen Druckschalter gesteuert wird, der ein an die Mediumdruckleitung angeschlossenes Dehnglied aufweist, dessen eines Ende fest am Mediumanschluß sitzt und dessen freies druckdicht abgeschlossenes anderes Ende sich in Abhängigkeit vom Mediumdruck mehr oder weniger durch elastische Verformung bewegt.

Bei zusatzbelasteten Sicherheitsventilen sind pneumatische Druckschalter bekannt, bei denen das bewegliche freie Ende des als spiralförmiges Bourdonrohr ausgebildeten Dehngliedes eine Steuerfahne trägt, die einen von einer Strahldüse auf eine Fangdüse gerichteten Luftstrahl bei Erreichen des Ansprechdruckes unterbricht (siehe DE-B-1 119 090). Durch diese Unterbrechung des Luftstrahles wird ein mit der Fangdüse in Verbindung stehendes, als Membranventil ausgebildetes Auslaßventil in der Membrankammer entlastet, wodurch ein von einer Gegenfeder belasteter Ventilkörper die Druckluftkammer des Zusatzbelastungszylinders zur Atmosphäre hin öffnet.

Da der Luftstrahl ständig ansteht, arbeitet dieser pneumatische Druckschalter mit dauernd hohem Luftverbrauch. Da die Steuerfahne bereits bei einem geringen Anstieg des Mediumdruckes den Luftstrahl über seinen vollen Durchmesser durchfahren muß, ist ein langer Stellweg pro Druckeinheit an der Steuerfahne erforderlich, was nur mit dem spiralförmig gewickelten und damit aufwendigen Bourdonrohr gelingt. Dieses spiralförmige Bourdonrohr hat sehr niederige Eigenfrequenzen und kommt bei den auftretenden Erschütterungen und Pulsationen leicht ins Schwingen, wordurch es zu Schaltfehlern und auch zu Ausfällen an der Steuerfahne kommen kann.

Abgesehen hiervon müssen bei Verwendung der Steuerfahne als Druckschalter in besonderen Fällen zusätzliche Maßnahme, wie Einbau von Zu- oder Abluftdrosseln oder Zwischenschaltung von Luftspeichern, getroffen werden, um das dynamische Verhalten des Sicherheitsventiles den Erfordernissen der Anlage anzupassen.

Aufgabe der Erfindung ist es, einen pneumatischen Druckschalter zum Steuern der Druckluftkammer einer mediumdurchströmten Armatur so zu verbessern, daß bei geringstem Luftverbrauch und hoher Schaltsicherheit ein schnelles Ansprechen der Armatur auf Druckänderung ohne Überreaktionen gewährleistet ist.

Diese Aufgabe wird erfindungsgemäß durch die kennzeichnenden Merkmale des Anspruches 1 gelöst.

Dadurch, daß das bewegliche Ende des Dehngliedes als Verschlußglied des Auslaßventiles ausgebildet ist, kann der Ventilsitz im Durchmesser so ausgebildet werden, daß der Sitzumfang bereits bei einem sehr kleinen Ventilhub, der nur etwa 1/5 bis 1/10 des Steuerfahnenweges beträgt, ausreicht, einen genügend großen Auslaßquerschnitt freizugeben. Das Dehnglied kann somit wesentlich steifer und weniger anfällig gegen Schwingungen und Pulsationen gestaltet werden. Da das Auslaßventil im Normalzustand geschlossen ist, tritt am Druckschalter kaum ein Luftverbrauch auf. Der nachgiebig an die Luftabführleitung zur Druckluftkammer angeschlossene Ventilsitz des Auslaßventiles ist hierbei an einem mittels Anpassfedern elastisch aufgehängten Träger vorgesehen, der von der einen, ersten Steuerluftkammer in Fließrichtung und von der anderen, zweiten Steuerluftkammer entgegengesetzt verlagert werden kann, so daß sich der Öffnungshub des Auslaßventils pro Druckanstiegseinheit im Gegensatz zu einem starren Ventilsitz vergrößert oder verkleinert.

Da die eine Steuerluftkammer an die Druckluftquelle und die andere Druckluftkammer an die Luftabführleitung angeschlossen ist, ist der Hub des Auslaßventils nicht nur vom Mediumdruck, sondern auch vom Druck in der Luftabführleitung abhängig. Da andererseits der Hub des Auslaßventils den Druck in der Luftabführleitung bestimmt, wird eine Rückkopplung erzielt, die je nach Beaufschlagungsrichtung als Mit- oder als Gegenkopplung wirkt. Mit dieser Rückkopplung läßt sich das dynamische Schaltverhalten der Armatur wesentlich verändern. Ist beispielsweise die Reaktion des Verschlußkörpers eines Sicherheitsventils auf Mediumdruckänderungen zu langsam, kann durch eine entsprechend weichere Anpaßfeder und auch durch Umschaltung der Anschlüsse der Steuerluftkammer von Gegenkopplung auf Mitkopplung das gewünschte Ansprechverhalten des Ventils erzielt werden. Bei zu schnellem Ansprechen der Armatur läßt sich durch umgekehrtes Vorgehen ebenfalls eine feinstufige Anpassung an die gewünschte Ventilreaktion erreichen.

Durch den Anschluß der in Schließrichtung des Auslaßventils auf den Träger einwirkenden Steuerluftkammer an die Druckluftquelle und den Anschluß der anderen Steuerluftkammer an die Luftabführleitung gemäß Anspruch 2 wird eine Gegenkopplung des Luftabführleitungsdruckes erzielt, während bei dem umgekehrten Anschluß der Leitungen entsprechend Anspruch 3 eine Mitkopplung erfolgt.

Bei Armaturen mit größeren Druckluftkammern ist der Öffnungsquerschnitt des Auslaßventils nicht groß genug, um die Luft aus der Druckluftkammer und die ständig aus der Druckluftquelle nachströmende Luft schnell genug abzuführen. Deshalb wird gemäß Anspruch 4 vorgeschlagen, das Auslaßventil als Vorsteuerventil für ein als Membran- oder Kolbenventil ausgebildetes Servoventil zu verwenden, das im Querschnitt groß genug ausgebildet werden kann, damit die Luftmenge schnell genug entweichen kann und auch schnell genug wieder zugeführt wird.

Durch die Merkmale des Anspruches 5 ergibt sich eine besonders einfache Ausbildung des Servoventiles als Zweiwegeventil, während bei dem als Dreiwegeventil ausgebildeten Servoventil nach Anspruch 6 der Vorteil darin liegt, daß bei einem zwar etwas größeren Aufwand die von der Druckluftquelle kommende Luft beim Entlüften ganz abgesperrt werden kann und nicht ständig nachströmt.

Gemäß Anspruch 7 kann der Träger elastisch an einer Stütze aufgehängt sein, an der auch die über Membranen oder Faltenbälge auf den Träger einwirkenden Steuerluftkanal befestigt sind. Die Stütze kann dabei von einem ruhenden Lagerbock gehalten werden, der an einem Ende über ein Gelenk und an dem anderen Ende über ein Stellschraube mit der Stütze verbunden ist.

Zum besseren Einstellen und Justieren ist die Stellschraube gemäß den kennzeichnenden Merkmalen des Anspruches 8 ausgebildet, wobei sich zur Unterstützung zwischen der Stütze und dem Lagerbock im Bereich der Stellschraube eine Stützfeder befindet.

In besonders vorteilhafter Weise kann zwischen dem beweglichen Ende des Dehngliedes und dem Ventilsitz des Auslaßventiles eine Ventilkugel vorgesehen sein, und der Ventilsitz einen Führungskäfig für die Ventilkugel tragen. Aufgrund der Ventilkugel können Unparallelitäten ausgeglichen werden.

Der Ventilsitz für das Auslaßventil wird dabei in bevorzugter Weise durch eine Bohrung im Träger gebildet, wobei an die Bohrung die Luftabführleitung elastisch angeschlossen ist.

Eine besonders vorteilhafte Ausgestaltung der Erfindung ist dem Anspruch 11 zu entnehmen. Danach kann zusätzlich ein Prüfanschluß vorgesehen werden, mit dem der Druckschalter geprüft werden kann.

Wenn man eine mediumdurchströmte Armatur mit zwei oder redundant angeordneten pneumatischen Druckschaltern benutzt, dann sind die Ventilspindein der Doppelventikkegel aller Druckschalter von einem einzigen abnehmbaren Handrad betätigbar, das nur in der für die Mediumleitung offenen Spindelendstellung über eine Verriegelungsnut seitlich abgenommen werden kann.

Anhand der Zeichnung, in der einige Ausführungsbeispiele der Erfindung dargestellt sind, wird die Erfindung näher erläutert und beschrieben.

Es zeigen:

Fig. 1   einen pneumatischen Druckschalter im Querschnitt mit angeschlossenem, nur schematisch dargestelltem zusatzbelastetem Sicherheitsventil,

Fig. 2   den Druckschalter mit dem Sicherheitsventil nach Fig. 1 mit zwischengeschaltetem Servoventil,

Fig. 3   die untere schematische Darstellung der Anschlüsse gemäß Fig. 2 mit einem anderen Servoventil,

Fig. 4   eine abgeänderte Ausführung des Druckschalters in Vorderansicht,

Fig. 5   einen Längsschnitt durch den Druckschalter nach Fig. 4 mit Doppelventilkegel und Handrad und

Fig. 6   das Handrad nach Fig. 5 in Draufsicht.

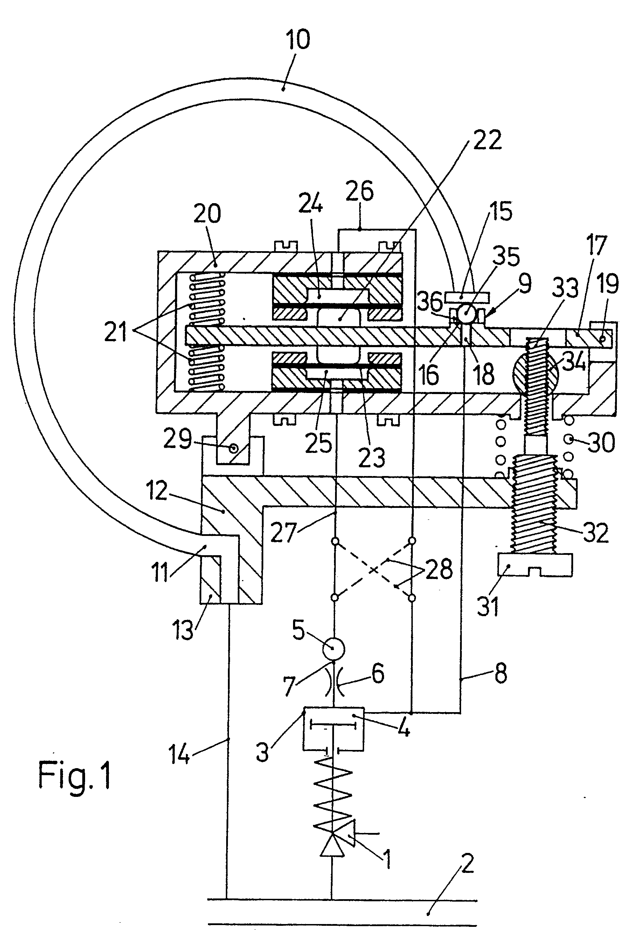

Die Fig. 1 zeigt ein Sicherheitsventil 1, dessen Eintritt an die Mediumdruckleitung 2 angeschlossen ist und das einen Zusatzbelastungszylinder 3 mit Druckluftkammer 4 trägt. Die Druckluft wird von der Druckluftquelle 5 über die mit einer Drossel 6 versehene Luftzuführleitung 7 in die Druckluftkammer 4 des Sicherheitsventils 1 eingeführt. Zur Entlastung der Druckluftkammer 4 ist diese über die Luftabführleitung 8 an das Auslaßventil 9 angeschlossen.

Das Auslaßventil 9 ist Bestandteil eines pneumatischen Druckschalters, dessen Dehnglied 10 an seinem festen Ende 11 im Lagerbock 12 des Druckschalters gehalten ist und über den Mediumanschluß 13 und die Verbindungsleitung 14 mit der Mediumdruckleitung 2 in offener Verbindung steht. Das sich unter der Einwirkung des Mediumdruckes bewegende freie Ende 15 des Dehngliedes 10 ist als Verschlußglied des Auslaßventils 9 ausgebildet. Der Ventilsitz 16 des Auslaßventils 9 wird durch den Rand einer in einen Träger 17 eingebrachten Bohrung 18 gebildet, an die die Luftabführleitung 8 nachgiebig angeschlossen ist. Der Träger 17 ist an seinem einen Ende im Gelenk 19 der Stütze 20 gelagert und ruht an seinem anderen Ende zwischen zwei von der Stütze 20 gehaltenen Anpaßfedern 21. Dadurch ist der Träger 17 mit seinem Ventilsitz 16 federnd beweglich gelagert. Der Träger 17 ist mit zwei symmetrischen Stütznoppen 22 versehen, die an den Membranen 23 der Steuerluftkammern 24 und 25 anliegen. Die Steuerluftkammer 24 steht über die Anschlußleitung 26 mit der Luftabführleitung 8 in offener Verbindung, während die Steuerluftkammer 25 über die Anschlußleitung 27 an die Druckluftquelle 5 angeschlossen ist. Soll anstelle der dargestellten Gegenkopplung eine Mitkopplung vorgesehen werden, so sind die Anschlußleitungen 26 und 27 für die Steuerluftkammern 24 und 25 durch die gestrichelt dargestellte Überkreuzschaltung 28 zu vertauschen.

Um eine Feineinstellung des Ansprechpunkts des Auslaßventils 9 zu ermöglichen, ist die Stütze 20 an ihrem einen Ende über das Gelenk 29 drehbar am Lagerbock 12 befestigt. An dem anderen beweglichen Ende der Stütze 20 sind zwischen Lagerbock 12 und Stütze 20 eine Stützfeder 30 und eine Stellschraube 31 vorgesehen. Die Stellschraube 31 besitzt zwei Gewindeabschnitte 32 und 33 mit gleichsinnigen, leicht unterschiedlichen Steigungen. Der Gewindeabschnitt 32 ist direkt in den Lagerbock 12 eingeschraubt, während der obere Gewindeabschnitt 33 in die Gelenkmutter 34 eingedreht ist. Am Auslaßventil 9 ist zwischen dem freien Ende 15 des Dehngliedes 10 und dem Ventilsitz 16 eine die Unparallelitäten ausgleichende Ventilkugel 35 vorgesehen, für deren Halterung der Führungskäfig 36 am Träger 17 dient.

Die Funktionsweise des in Fig. 1 dargestellten Druckschalters ist folgende:
Im Normalzustand ist das Sicherheitsventil 1 geschlossen und im Zusatzbelastungszylinder 3 steht Belastungsluft in der Druckluftkammer 4 an. Übersteigt der Mediumdruck in der Leitung 2 den Ansprechdruck des Sicherheitsventils, so hebt sich das freie Ende 15 des Dehngliedes 10 und damit die Ventilkugel 35, wodurch die Druckluft aus der Druckluftkammer 4 über die Luftabführleitung 8 aus dem Auslaßventil 9 ins Freie entweichen kann. Dadurch wird die Druckluftkammer 4 soweit entlastet, daß das Sicherheitsventil 1 öffnet. Der Öffnungsquerschnitt des Auslaßventils 9 ist größer als der Querschnitt der Drossel 6, so daß der Druck in der Druckluftkammer 4 trotz der ständig über die Drossel 6 aus der Druckluftquelle 5 zuströmenden Druckluft bis nahezu auf Null gesenkt werden kann.

Der Öffnungs- und Schließvorgang des Sicherheitsventils 1 läßt sich durch die Steuerluftkammern 24 und 25 beeinflussen Sind die Steuerluftkammern 24 und 25 wie dargestellt angeschlossen, so ist beim Öffnen des Auslaßventils 9 die in Schließrichtung wirkende Kraft der Steuerluftkammer 25 größer als die entgegengesetzt wirkende Kraft der Steuerluftkammer 24, wodurch sich der Träger 17 mit dem Ventilsitz 16 in Ventilschließrichtung mitbewegt. Die Größe dieser Bewegung hängt ab von den geometrischen Abmessungen der Steuereinrichtung und kann leicht durch Austauschen der Anpaßfedern 21 verstärkt oder vermindert werden. Durch diese Gegenkopplung wird das Entlüften der Druckluftkammer 4 mehr oder weniger verlangsamt, wodurch beispielsweise bei großen Rohrleitungen Stoßbelastungen vermieden werden. Ist dagegen aus Sicherheitsgründen ein schnelles Öffnen des Sicherheitsventils 1 erforderlich, so kann durch Umpolen der Anschlußleitungen 26 und 27 durch die Überkreuzschaltung 28 eine Mitkopplung mit in Öffnungsrichtung wanderndem Ventilsitz 16 erreicht werden.

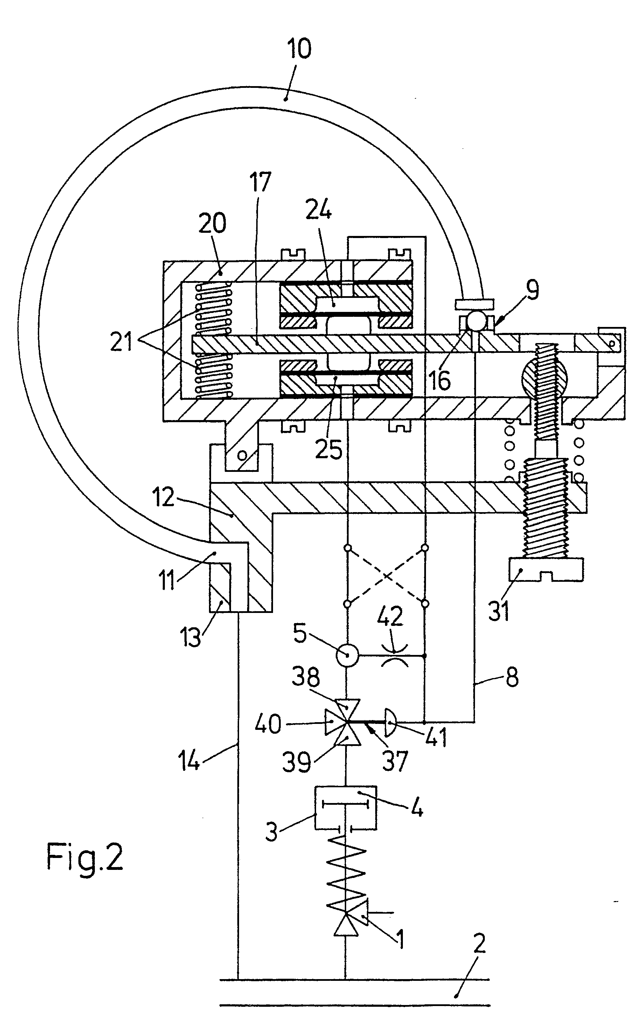

Bei dem Ausführungsbeispiel nach Fig. 2 dient das Auslaßventil 9 als Vorsteuerventil für das Servoventil 37. Dieses Servoventil ist als Dreiwegeventil ausgebildet und besitzt einen ersten Anschluß 38 zur Druckluftquelle 5 sowie einen zweiten Anschluß 39 zur Druckluftkammer 4. Außerdem ist ein in die Atmosphäre mündender Auslaß 40 vorgesehen. Der Steuerluftraum 41 des Servoventils 37 ist an die Luftabführleitung 8 angeschlossen und betätigt das Absperrorgan des Servoventils in der Weise, daß die Druckluftkammer 4 in der einen Ventilstellung mit der Druckluftquelle 5 und in der anderen Stellung mit der Atmosphäre verbunden ist. Die Luftabführleitung 8 ist hier über die Drossel 42 auch an die Druckluftquelle 5 angeschlossen.

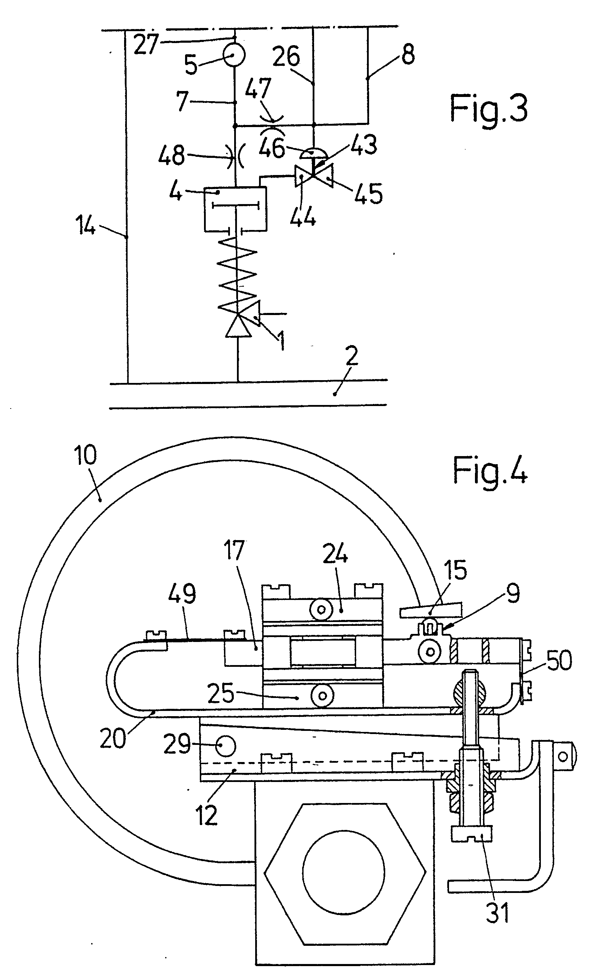

Die Fig. 3 zeigt ein anderes Servoventil 43, das als Zweiwegeventil ausgebildet ist und dessen Eintritt 44 mit der Druckluftkammer 4 in Verbindung steht und dessen Austritt 45 in die Atmosphäre mündet. Der Steuerluftraum 46 dieses Servoventils ist mit der Luftabführleitung 8 und über eine Drossel 47 mit der Druckluftquelle 5 verbunden. Die Drossel 43 ist in die Luftzuführleitung 7 von der Druckluftquelle 5 zur Druckluftkammer 4 eingesetzt. Beim Öffnen des Auslaßventils 9 wird der Steuerluftraum 46 des Servoventils 43 entlastet, womit der Durchgang vom Eintritt 44 zum Atmosphärenaustritt 45 freigegeben und die Druckluftkammer 4 dadurch entlastet wird. Der in der Fig. 4 gezeigte pneumatische Druckschalter ist eine Variante des Druckschalters nach Fig. 1, wobei die wesentlichen Unterschiede darin bestehen, daß anstelle der zylindrischen Schraubendruckfedern 21 eine oder mehrere Blattfedern 49 als Anpaßfedern vorgesehen sind und anstelle des Gelenks 19 zwischen der Stütze 20 und dem Träger 17 ebenfalls eine Blattfeder 50 sitzt.

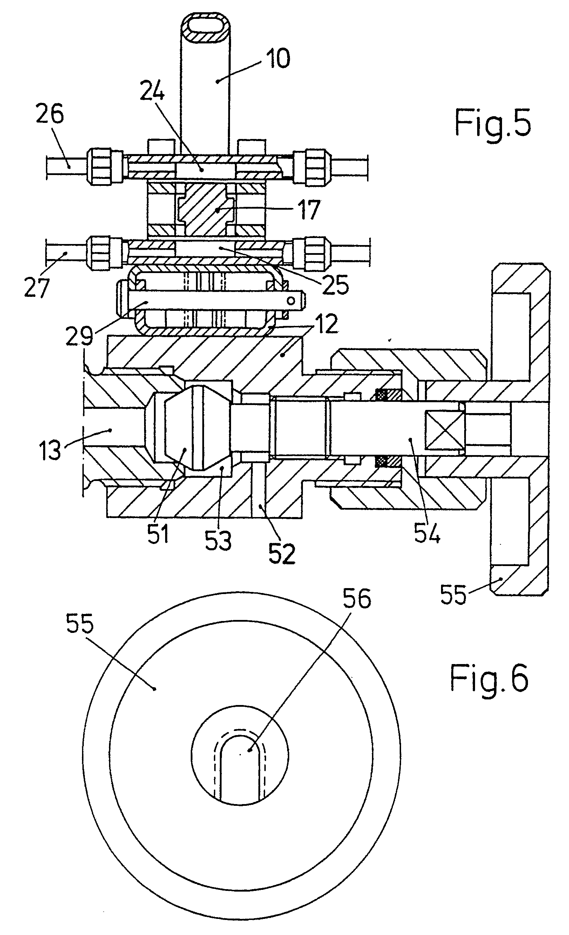

Aus den Fig. 5 und 6 ist ein in den Lagerbock 12 eingebaute Doppelventilkegel 51 ersichtlich, der in der einen Endlage den Anschluß 13 für die Mediumleitung 14 und in der anderen Endlage einen Prüfanschluß 52 für eine nicht näher dargestellte Prüfpumpe über den Zuführungskanal 53 mit dem Dehnglied 10 verbindet. Die Ventilspindel 54 des Doppelventilkegels 51 wird durch ein Handrad 55 betätigt, das über eine seitliche Verriegelungsnut 56 nur dann von der Ventilspindel 54 abnehmbar ist, wenn sich der Doppelventilkegel 51 in der für die Mediumleitung 13 offenen Endlage befindet. Beim Einsatz mehrerer redundant angeordneter Druckschalter wird nur ein einziges Handrad 55 vorgesehen, so daß gewährleistet ist, daß immer nur ein Druckschalter für Prüfzwecke von der Mediumleitung 13 auf den Prüfanschluß 52 umgeschaltet werden kann.

**Ansprüche**

1. Pneumatischer Druckschalter zum Steuern der Druckluftkammer (4) einer mediumdurchströmten Armatur, insbesondere eines zusatzbelasteien Sicherheitsventiles (1), wobei die Druckluftkammer (4) über eine Luftzuführleitung (7) an eine Druckluftquelle (5) und über eine Luftabführleitung (8) an ein Auslaßventil (9) angeschlossen ist, das einen größeren Öffnungsquerschnitt als die gegebenenfalls gedrosselte Luftzuführleitung (7) aufweist und von dem pneumatischen Druckschalter gesteuert wird, der ein an eine Mediumdruckleitung (2) angeschlossenes Dehnglied aufweist, dessen eines Ende fest am Mediumanschluß (13) sitzt und dessen freies druckdicht abgeschlossenes anderes Ende sich in Abhängigkeit vom Mediumdruck mehr oder weniger durch elastische Verformung bewegt, dadurch gekennzeichnet, daß das freie bewegliche Ende (15) des Dehngliedes (10) als Verschlußglied des Auslaßventils (9) ausgebildet ist, dessen nachgiebig an die Luftabführleitung (8) zur Druckluftkammer (4) angeschlossene Ventilsitz (16) an einem mittels einer oder mehrer Anpassfedern (21) elastisch aufgehängten Träger (17) sitzt, der mit zwei entgegengesetzt auf den Ventilsitz (16) des Auslaßventiles (9) einwirkenden Steuerluftkammern (24, 25) gekoppelt ist, von denen die eine direkt mit der Druckluftquelle (5) und die andere mit der Luftabführleitung (8) in Verbindung steht.

2. Pneumatischer Druckschalter nach Anspruch 1, dadurch gekennzeichnet, daß die in Schließrichtung des Auslaßventiles (9) auf den Träger (17) einwirkende Steuerluft (25) an die Druckluftquelle (5) und die in Ventilöffnungsrichtung auf den Träger (17) einwirkenden Steuerluftkammer (24) an die Luftabführleitung (8) angeschlossen ist.

3. Pneumatischer Druckschalter nach Anspruch 1, **dadurch gekennzeichnet,** daß die in Schließrichtung des Auslaßventils (9) auf den Träger (17) einwirkende Steuerluftkammer (25) an die Luftabführleitung (8) und die in Ventilöffnungsrichtung auf den Träger einwirkende Steuerluftkammer (24) an die Druckluftquelle (5) angeschlossen ist.

4. Pneumatischer Druckschalter nach einem der Ansprüche 1 bis 3 für Armaturen mit größeren Druckluftkammern, **dadurch gekennzeichnet,** daß das Auslaßventil (9) das Vorsteuerventil für ein als Membran- oder Kolbenventil ausgebildetes Servoventil (37,43) bildet.

5. Pneumatischer Druckschalter nach Anspruch 4, **dadurch gekennzeichnet,** daß das Servoventil (43) als Zweiwegeventil einen an die Druckluftkammer (4) angeschlossenen Eintritt (44) und einen in die Atmosphäre mündenden Austritt (45) aufweist und der das Absperrorgan steuernde Steuerluftraum (46) des Servorventils mit der Luftabführleitung (8) in offener Verbindung steht und die Luftabführleitung (8) über eine Drossel (47) an die Druckluftquelle (5) angeschlossen ist.

6. Pneumatischer Druckschalter nach Anspruch 4, **dadurch gekennzeichnet,** daß das Servoventil (37) als Dreiwegeventil mit einem ersten Anschluß (38) zur Druckluftquelle (5) und einem zweiten Anschluß (39) zur Druckluftkammer (4) sowie mit einem Auslaß (40) zur Atmosphäre versehen ist, und das von einem an die Luftabführleitung (8) angeschlossenen Steuerluftraum (41) betätigte Absperrorgan des Servo-ventils die Druckluftkammer (4) in der einen Stellung mit der Druckluftquelle (5) und in der anderen Stellung mit der Atmosphäre verbindet.

7. Pneumatischer Druckschalter nach einem der Ansprüche 1 bis 6, **dadurch gekennzeichnet,** daß der Träger (17) elastisch an einer Stütze (20) aufgehängt ist,. an der auch die über Membranen (23) oder Faltenbälge auf den Träger (17) einwirkenden Steuerluftkammern (24,25) befestigt sind, wobei die Stütze (20) von einem ruhenden Lagerbock (12) gehalten wird, der an einem Ende über ein Gelenk (29) und an dem anderen Ende über eine Stellschraube (31) mit der Stütze (20) verbunden ist.

8. Pneumatischer Druckschalter nach Anspruch 7, **dadurch gekennzeichnet,** daß die Stellschraube (31) zwei Gewindeabschnitte (32,33) mit geringfügig unterschiedlichen gleichsinnigen Steigungen aufweist, wobei der eine Gewindeabschnitt (32) in den Lagerbock (12) und der andere Gewindeabschnitt (33) in eine drehbar auf der Stütze (20) aufliegende Gelenkmutter (34) eingeschraubt ist, und sich zwischen der Stütze (20) und dem Lagerbock (12) im Bereich der Stellschraube (31) eine Stützfeder (30) befindet.

9. Pneumatischer Druckschalter nach einem der Ansprüche 1 bis 8, **dadurch gekennzeichnet,** daß zwischen dem beweglichen Ende (15) des Dehngliedes (10) und dem Ventilsitz (16) des Auslaßventils (9) eine Ventilkugel (35) vorgesehen ist und der Ventilsitz (16) einen Führungskäfig (36) für die Ventilkugel (35) trägt.

10. Pneumatischer Druckschalter nach einem der Ansprüche 1 bis 9, **dadurch gekennzeichnet,** daß eine Bohrung (18) im Träger (17) den Ventilsitz (16) für das Auslaßventil (9) bildet, an die die Luftabführleitung (8) elastisch angeschlossen ist.

11. Pneumatischer Druckschalter nach einem der Ansprüche 7 bis 10, **dadurch gekennzeichnet,** daß der feststehende Lagerbock (12) das Dehnglied (10) trägt und am festen offenen Ende (11) des Dehngliedes den Anschluß (13) für die Mediumleitung (14) und auf der anderen Seite den Prüfanschluß (52) für eine Prüfpumpe aufweist und zwischen diesen beiden Zuleitungsanschlüssen (13,52) ein Doppelventilkegel (51) in den Lagerbock (12) eingebaut ist, der in der einen Endlage die Mediumleitung (14) und in der anderen Endlage den prüfanschluß (52) über einen Zuführungskanal (53) mit dem Dehnglied (10) verbindet.

12. Mediumdurchströmte Armatur mit zwei oder drei redundant angeordneten pneumatischen Druckschaltern nach Anspruch 11, **dadurch gekennzeichnet,** daß die Ventilspindel (54) der Doppelventilkegel (51) von einem einzigen abnehmbaren Handrad (55) betätigbar sind, das nur in der für die Mediumleitung (13) offenen Spindelendstellung über eine Verriegelungsnut (56) seitlich abgenommen werden kann.

**Claims**

1. pneumatic pressure switch for controlling the compressed-air chamber (4) of a fitting through which a medium flows, especially of a relief valve (1) subjected to an additional load, the compressed-air chamber (4) being connected via an air-feed pipe (7) to a compressed-air source (5) and via an air-discharge pipe (8) to an outlet valve (9) which has a larger opening cross-section than the possibly restricted air-feed pipe (7) and is controlled by the pneumatic pressure switch, which has an expanding member connected to a pressurized pipe (2) bearing a medium, one end of which expanding member is mounted firmly on the medium connection (13) and the other, free end of which, which is sealed in pressure-tight fashion, moves as a function of the medium pressure to a greater or lesser extent, by elastic deformation, characterised in that the free, mobile end (15) of the expanding member (10) is designed as the closing member of the outlet valve (9), the valve seat (16) of which, which is connected non-rigidly to the air-discharge pipe (8) leading to the compressed-air chamber (4), is mounted on a carrier (17) which is resiliently suspended by means of one or more adaptation springs (21) and is coupled to two control-air chambers (24, 25) acting in opposite directions on the valve seat (16) of the outlet valve (9), one of which is connected directly to the compressed-air source (5) and the other of which is connected to the air-discharge pipe (8).

2. Pneumatic pressure snitch according to Claim 1, characterised in that the control air (25) acting on the carrier (17) in the closing direction of the outlet valve (9) is connected to the compressed-air source (5) and the control-air chamber (24) acting on the carrier (17) in the valve-opening direction is connected to the air-discharge pipe (8).

3. Pneumatic pressure switch according to Claim 1, characterised in that the control-air chamber (25) acting on the carrier (17) in the closing direction of the outlet valve (9) is connected to the air-discharge pipe (8) and the control-air chamber (24) acting on the carrier in the valve-opening direction is connected to the compressed-air source (5).

4. Pneumatic pressure switch according to one of Claims 1 to 3 for fittings having relatively large compressed-air chambers, characterised in that the outlet valve (9) forms the pilot valve for a servo valve (37, 43) designed as a diaphragm or plunger valve.

5. Pneumatic pressure switch according to Claim 4, characterised in that the servo valve (43), as a two-way valve, has an inlet (44) connected to the compressed-air chamber (4) and an outlet (45) opening to the atmosphere and the servo-valve control-air space (46) which controls the shut-off member is in open connection with the air-discharge pipe (8) and the air-discharge pipe (8) is connected to the compressed-air source (5) via a restrictor (47).

6. Pneumatic pressure switch according to Claim 4, characterised in that the servo valve (37), as a three-way valve, is provided with a first connection (38) to the compressed-air source (5) and a second connection (39) to the compressed-air chamber (4) and with an outlet (40) to the atmosphere, and the servo-valve shut-off member actuated by a control-air space (41) connected to the air-discharge pipe (8) connects the compressed-air chamber (4) to the compressed-air source (5) in one position and to the atmosphere in the other position.

7. Pneumatic pressure switch according to one of Claims 1 to 6, characterised in that the carrier (17) is resiliently suspended on a support (20) on which the control-air chambers (24, 25) acting via diaphragms (23) or bellows on the carrier (17) are also secured, the support (20) being held by a fixed bracket (12) which is connected at one end via an articulation (29) and at the other end via an adjusting screw (31) to the support (20).

8. pneumatic pressure switch according to Claim 7, characterised in that the adjusting screw (31) has two thread portions (32, 33) with slightly different pitches in the same direction, one thread portion (32) being screwed into the bracket (12) and the other thread portion (33) being screwed into an articulation nut (34) resting rotatably on the support (20), and there is a supporting spring (30) between the support (20) and the bracket (12) in the region of the adjusting screw (31).

9. Pneumatic pressure switch according to one of Claims 1 to 8, characterised in that a valve ball (35) is provided between the mobile end (15) of the expanding member (10) and the valve seat (16) of the outlet valve (9) and the valve seat (16) carries a guiding cage (36) for the valve ball (35).

10. Pneumatic pressure switch according to one of Claims 1 to 9, characterised in that a hole (18) in the carrier (17) forms the valve seat (16) for the outlet valve (9), the air-discharge pipe (8) being flexibly connected to said hole.

11. Pneumatic pressure switch according to one of Claims 7 to 10, characterised in that the fixed bracket (12) carries the expanding member (10) and, at the fixed open end (11) of the expanding member, has the connection (13) for the pipe (14) bearing the medium and, on the other side, has the test connection (52) for a test pump, and a double-acting-valve cone (51) is built into the bracket (12) between these two feed connections (13, 52), in one end position connecting the pipe (14) bearing the medium and, in the other end position, the test connection (52) to the expanding member (10) via an admission channel (53).

12. Fitting through which a medium flows, having two or three redundantly arranged pneumatic pressure switches, according to Claim 11, characterised in that the valve stem (54) of the double-acting-valve cone (51) is actuable by a single removable handwheel (55) which can be removed laterally via a locking groove (56) only in the stem end position which is open for the pipe (13) bearing the medium.

## Revendications

1. Manocontacteur pneumatique pour la commande de la chambre de compression (4) d'une armature traversée par un milieu, en particulier d'une soupape de sécurité (1), la chambre de compression (4) étant reliée d'une part, par une conduite d'alimentation d'air (7) à une source d'air comprimé (5) et d'autre part, par une conduite d'évacuation d'air (8) à une soupape de décharge (9), possédant un diamètre d'ouverture supérieur à la conduite d'alimentation d'air (7) éventuellement étranglée et commandé par le manocontacteur pneumatique comportant un organe de dilatation relié à une conduite de pression du milieu (2) et dont une extrémité est fixée au raccord du milieu (13) et l'extrémité libre, étanche à la pression, se meut plus ou moins par déformation élastique selon la pression du milieu, caractérisé par le fait que l'extrémité libre mobile (15) de l'organe de dilatation (10) est conçue comme organe de fermeture de la soupape de décharge (9), dont le siège (16), raccordé ce façon souple à la conduite d'évacuation d'air (8) vers la chambre de compression (4), est fixé à un support (17) suspendu de façon élastique au moyen d'un ou de plusieurs ressorts d'adaptation (21), relie à deux chambres d'air de réglage (24, 25), agissant inversement sur le siège (16) de la soupape de décharge (9) et dont l'une est directement reliée à la source d'air comprimé (5) et l'autre à la conduite d'évacuation d'air (8).

2. Manocontacteur pneumatique selon revendication 1, caractérisé par le fait que l'air de réglage (25), agissant sur le support (17) dans le sens de fermeture de la soupape de décharge (9), est raccordé à la source d'air comprimé (5) et que la chambre d'air de réglage (24), agissant sur le support (17) dans le sens d'ouverture de la soupape, est raccordée à la conduite d'évacuation d'air (8).

3. Manocontacteur pneumatique selon revendication 1, caractérisé par le fait que la chambre d'air de réglage (25), agissant sur le support (17) dans le sens de fermeture de la soupape de décharge (9) est raccordé à la conduite d'évacuation d'air (8) et que la chambre d'air de réglage (24), agissant sur le support dans le sens d'ouverture de la soupape, est raccordée à la source d'air comprimé (5).

4. Manocontacteur pneumatique selon une des revendications 1 à 3 pour amatures à chambres de compression plus grandes, caractérisé par le fait que la soupape de décharge (9) forme une soupape de préréglage pour une servovalve (37,43) conçue comme soupape à diaphragme ou à piston.

5. Manocontacteur pneumatique selon revendication 4, caractérisé par le fait que la servovalve (43) est à deux voies et comporte une entrée (44) raccordée à la chambre de compression (4) et une sortie (45) raccordée à l'atmosphère et dont la chambre d'air de réglage (46) de la servovalve, commandant l'organe de fermeture, est en raccord ouvert avec la conduite d'évacuation d'air (8) et dont la conduite d'évacuation d'air (8) est raccordés a la source d'air comprimé (5) par l'intermédiaire d'un étrangleur (47).

6. Manocontacteur pneumatique selon revendication 4, caractérisé par le fait que la servovalve (37) est à trois voies et munie d'un premier raccord (38) vers la source d'air comprimé (5) et d'un second raccord (39) vers la chambre de compression (4), ainsi que d'une sortie (40) vers l'atmosphère et que l'organe de fermeture de la servovalve, actionné par une chambre d'air de réglage (41), raccordée à la conduite d'évacuation d'air (8), raccorde, dans une position, la chambre de compression (4) à la source d'air comprimé (5) et dans l'autre position, à l'atmosphère.

7. Manocontacteur pneumatique selon une des revendications 1 à 6, caractérisé par le fait que lo support (17) est suspendu de façon élastique à un appui (20), auquel sont également fixées les chambres d'air de réglage (24,25) agissant sur le support (17) par l'intermédiaire de membranes ou de soufflets, l'appui (20) étant maintenu par un support fixe (12), dont une extrémité est reliée à l'appui (20) par une articulation (29) et l'autre extrémité par une vis de réglage (31).

8. Manocontacteur pneumatique selon revendication 7, caractérisé par le fait que la vis de réglage (31) comporte deux sections de filets (32,33) avec des pas synchrones légèrement différents, dont une section (32) est vissée dons le support (12) et l'autre section (33) est vissée dans un écrou (34) reposant de façon articulée sur l'appui (20) et qu'il existe entre l'appui (20) et le support (12), autour de la vis de réglage (31), un ressort de soutien (30).

9. Manocontacteur pneumatique selon une des revendications 1 à 6, caractérisé par le fait qu'une bille de soupape (35) est prévue entre l'extrémité mobile (15) de l'organe de dilatation (10) et le siège (16) de la soupape de décharge (9) et que le siège (16) supporte une boîte de guidage (36) pour la bille de soupape (35).

10. Manocontacteur pneumatique selon une des revendications 1 à 9, caractérisé par le fait que le siège (16) de la soupape de décharge (9) est formé par un alésage (18) dans le support (17), auquel la conduite d'évacuation d'air (8) est raccordée de façon élastique.

11. Manocontacteur pneumatique selon une des revendications 7 à 10, caractérisé par le fait que le support fixe (12) porte l'organe de dilatation (10) et qu'il comporte a l'extrémité fixe ouverte (11) de l'organe de dilatation le raccord (13) pour la conduite du milieu (14) et à l'autre extrémité le raccord de vérification (52) pour une pompe de vérification et qu'entre ces deux raccords de conduites d'alimentation (13,52) un cône de soupape cloche (51) est monté dans le support (12), qui, dans une position finale, relie la conduite du milieu (14) et, dans l'autre position, le raccord de vérification (52) à l'organe de dilatation, (10) par l'intermédiaire d'un canal d'alimentation (53).

12. Armature traversée par un milieu avec deux ou trois manocontacteurs pneumatiques salon la revendication 11, disposés de façon redondante, caractérisée par le fait que les tiges de soupape (54) des cônes de soupape cloche (51) peuvent être actionnées par un seul volant (55) amovible latéralement seulement, par L'intermédiaire d'une rainure de verrouillage (56) et en cas de position finale ouverte de la tige pour la conduite du milieu (13).

Fig.1

EP 0 205 129 B1

Fig.2

Fig.3

Fig.4

Fig.5

Fig.6